# EUROPÄISCHE PATENTSCHRIFT

(11) **EP 4 019 116 B1**
(45) Veröffentlichungstag und Bekanntmachung des Hinweises auf die Patenterteilung: **19.08.2026**
(21) Anmeldenummer: 21214850.6
(22) Anmeldetag: 15.12.2021
(51) Int. Cl.: B01D 61/12, B01D 61/02, B01J 8/00

(54) **VARIABLE, SELBSTREGULIERENDE PERMEATRÜCKFÜHRUNG IN DER ORGANOPHILEN NANOFILTRATION**
VARIABLE, SELF-REGULATING PERMEATE RECOVERY IN ORGANOPHILIC NANOFILTRATION
RÉCUPÉRATION VARIABLE ET AUTO-RÉGULANT DU PERMÉAT DANS LA NANOFILTRATION ORGANOPHILE

(30) Priorität: 22.12.2020 EP 20216292
(43) Veröffentlichungstag der Anmeldung: 29.06.2022
(73) Patentinhaber: Evonik Oxeno GmbH & Co. KG, 45772 Marl (DE)
(72) Erfinder: Quell, Thomas, 2030 Antwerpen (BE); Knossalla, Johannes, 46514 Gahlen (DE); Franke, Robert, 45772 Marl (DE); Drees, Stefan, 48249 Dülmen (DE); Gluth, Frederik, 45472 Mülheim an der Ruhr (DE); Schäpertöns, Marc, 45657 Recklinghausen (DE); Höckelmann, Fabian, 45770 Marl (DE)
(74) Vertreter: Evonik Patent Association

(56) Entgegenhaltungen:
- EP-A1- 3 059 005
- WO-A1-2014/000113
- WO-A1-2014/183952
- WO-A1-2020/080008
- DE-A1- 102013 113 641

## Beschreibung

Die vorliegende Erfindung betrifft eine regel- und prozesstechnische Verbesserung für ein Verfahren zur kontinuierlichen Abtrennung einer Komponente aus einem flüssigen Gemisch unter Verwendung einer Membraneinheit, die mindestens eine Membranstufe umfasst. Die Verbesserung besteht darin, dass zumindest ein Teil des erhaltenen Gesamtpermeatstroms zum Feedbehälter und/oder hinter den Feedbehälter aber vor die Fördereinrichtung zurückgeführt wird. Das vorliegend beschriebene Verfahren kann insbesondere zur Abtrennung eines homogen gelösten Katalysators aus einem flüssigen Reaktionsgemisch verwendet werden.

Membrantrennverfahren, zum Beispiel für die Abtrennung von homogen gelösten Katalysatoren aus einem Reaktionsgemisch, sind im Stand der Technik grundsätzlich bekannt. Hierzu sei exemplarisch auf die WO 2014/131623 A1 verwiesen.

Für Membrantrennverfahren dieser Art sind auch bereits regeltechnische Verbesserungen beschrieben worden. In der internationalen Anmeldung WO 2014/183952 A1 wird beispielsweise ein Membrantrennverfahren zur Abtrennung eines homogen gelösten Katalysators aus einem Reaktionsgemisch offenbart, bei dem regelungstechnisch zwei Größen, der Retentatvolumenstrom der Membrantrenneinheit und der Rückhalt der Membrantrenneinheit, konstant gehalten werden, um schwankende Betriebsbedingungen, insbesondere Schwankungen im Volumenstrom des aus der Reaktionszone stammenden Reaktionsgemisches, auszugleichen.

Um die vorgenannten Regelgrößen konstant zu halten, schlägt die WO 2014/183952 A1 einen Fließwiderstand zur Einstellung bzw. zur Konstanthaltung des Retentatvolumenstroms und eine Regelung der Temperatur und/oder des Drucks im Überströmkreislaufes zur Einstellung bzw. zur Konstanthaltung des Rückhalts vor.

Ein Problem des dort vorgeschlagenen Verfahrens ist, dass eine Konstanthaltung des Rückhalts der Membrantrenneinheit nicht für alle Verfahren zielführend ist, sondern - unter Berücksichtigung des Anlagendurchsatzes und der bereits installierten Membranfläche der Membrantrenneinheit - vielmehr eine Optimierung, häufig eine Maximierung, des Rückhaltes der Membrantrenneinheit während des Verfahrens angestrebt werden sollte. Eine wie in der WO 2014/183952 A1 beschriebene Regelung mittels eines Fließwiderstandes kann gegebenenfalls dazu führen, dass die bereits installierte Membranfläche nicht beim optimalen Transmembrandruck, sondern unterhalb dessen betrieben wird. Das dort beschriebene Verfahren kann weiterhin dazu führen, dass bei gegebenem Gesamtdurchsatz der Anlage und dem sich daraus ergebenden abgeführten Permeatstrom (Teil des Permeatstroms, der permeatseitig aus der Membrantrenneinheit herausgeführt wird), der Gesamtpermeatstrom und der sich daraus anhand einer einfachen Massenbilanz unter Berücksichtigung des abgeführten Permeatstroms ergebende zurückgeführte Permeatstrom (Teil des Gesamtpermeatstroms, der in die Membrantrenneinheit rezykliert wird) kleiner ausfällt als dies möglich und/oder wünschenswert wäre.

Ein weiterer Nachteil des in der WO 2014/183952 A1 beschriebenen Verfahrens ist, dass es sowohl einen Behälter für das Permeat, als auch eine Pumpe vorsieht, um ein permeatseitig konstantes Regelungssystem zu erhalten. Mit der Bereitstellung einer Pumpe, die Permeat aus dem Permeatbehälter in den Überströmkreislauf oder den Feedbehälter pumpt, sind jedoch ein erhöhtes Anlageninventar und Kosten verbunden, beispielsweise für die Anschaffung oder für den Betrieb, die Instandhaltung und die Reparatur, die darüber hinaus auch einen Anlagenausfall und damit einen Produktionsausfall zu Folge haben können.

DE 10 2013 113 641 A1 beschreibt ein Verfahren bzw. eine Anlage zur membranbasierten Trennung eines flüssigen Gemisches, bei der Ströme innerhalb einer Membraneinheit mit Rückführung (Recycle) geführt werden, um einen kontinuierlichen Betrieb mit stabilen Trennbedingungen zu ermöglichen.

Der Einbau eines Behälters führt darüber hinaus im Regelfall dazu, dass der permeatseitige Teil der Membrantrennstufe nicht hydraulisch gefüllt ist, was insbesondere bei Verwendung toxischer Fluide gegebenenfalls zu erhöhten Sicherheitsrisiken führen kann. Zudem entsteht durch einen Behälter auf Permeatseite zusätzlich zum Feedbehälter die Möglichkeit, dass die Regelung der beiden Behälterstände zu gegenseiteigen Schwankungen führen kann.

Die Aufgabe der vorliegenden Erfindung war deshalb die Bereitstellung eines kostengünstigeren Verfahrens zur kontinuierlichen Abtrennung einer Komponente aus einem Gemisch, vorzugsweise zur kontinuierlichen Abtrennung eines homogenen Katalysators aus einem Reaktionsgemisch. Weiterhin war es die Aufgabe der vorliegenden Erfindung eine selbstregulierende Permeatrückführung bei dem Verfahren zur kontinuierlichen Abtrennung einer Komponente aus einem Gemisch, vorzugsweise zur kontinuierlichen Abtrennung eines homogenen Katalysators aus einem Reaktionsgemisch, bereitzustellen, bei dem die installierte Membranfläche bei unterschiedlichen Lastzuständen optimal ausgenutzt werden kann, zum Beispiel zur Maximierung des Rückhalts bzw. der Ausbeute.

Die zugrundeliegende Aufgabe konnte durch das Verfahren gemäß Anspruch 1 gelöst werden. Bevorzugte Ausgestaltungen und Ausführungsformen sind in den Unteransprüchen angegeben.

Das erfindungsgemäße Verfahren ist ein Verfahren zur kontinuierlichen Abtrennung einer Komponente aus einem flüssigen Gemisch unter Verwendung einer Membraneinheit, die mindestens eine Membranstufe umfasst und mit dem Gemisch als Feed gespeist wird,
wobei eine Membranstufe zumindest aus einer Fördereinrichtung, einem oder mehreren Membranmodul(en) und einem der Fördereinrichtung vorgeschalteten Feedbehälter besteht und wobei das Gemisch aus dem Feedbehälter mittels der Fördereinrichtung als Feed zu dem einen oder den mehreren Membranmodulen geführt wird, wodurch die abzutrennende Komponente, jeweils bezogen auf das zum jeweiligen Membranmodul geführte Gemisch, im resultierenden Permeatstrom dieses jeweiligen Membranmoduls abgereichert und im resultierenden Retentatstrom dieses jeweiligen Membranmoduls angereichert wird oder umgekehrt, dadurch gekennzeichnet, dass
der erhaltene Gesamtpermeatstrom der letzten Membranstufe aufgeteilt wird und ein Teil des Gesamtpermeatstroms, das zurückgeführte Permeat, zum Feedbehälter und/oder hinter den Feedbehälter aber vor die Fördereinrichtung rezykliert wird und der andere Teil des Gesamtpermeatstroms, das abgeführte Permeat, permeatseitig aus der letzten Membranstufe und aus der Membraneinheit herausgeführt wird, wobei das Rezyklieren des zurückgeführten Permeats zum Feedbehälter und/oder hinter den Feedbehälter aber vor die Fördereinrichtung nicht mittels einer Fördereinrichtung, sondern hydraulisch, d. h. durch eine zwischen Permeatseite der Membraneinheit und Saugseite der Fördereinrichtung bzw. dem Feedbehälter bestehenden Druckdifferenz, erfolgt.

Der Begriff abzutrennende Komponente meint im Rahmen der vorliegenden Erfindung die Komponente, welche anteilig und/oder nach der Permeabilität gewollt weniger stark durch die Membran permeiert, also die Komponente, die durch die Membran zurückgehalten wird. Die abzutrennende Komponente weist für die jeweils betrachteten Membranmodule somit einen positiven Rückhalt auf. Die abzutrennende Komponente kann zudem eine einzelne spezifische chemische Substanz sein aber auch eine Gruppe chemischer Substanzen, die prozesstechnisch in einem gemeinsamen Kontext betrachtet werden.

Membraneinheit im Sinne der vorliegenden Erfindung betrifft die gesamte Membrantrenneinheit, zur der das flüssige Gemisch, welches die abzutrennende Komponente enthält, geleitet wird. Eine Membraneinheit besteht aus mindestens einer Membranstufe. Nachgeschaltete Weiterverarbeitungs- oder Aufreinigungsschritte, sowie eine eventuelle Lagerung des abgeführten Permeats in einem Behälter sind deshalb definitionsgemäß nicht der Teil der Membraneinheit.

Der Begriff Membranstufe meint zumindest einen Teil der Membraneinheit und umfasst mindestens eine Fördereinrichtung, beispielsweise eine Pumpe, und ein oder mehrere Membranmodul(e). Für den Fall, dass nur eine einzige Membranstufe vorliegt, sind die Begriffe Membraneinheit und Membranstufe synonym zu verstehen. Die Membranstufe weist einen der Fördereinrichtung vorgeschalteten Feedbehälter auf, in den das flüssige Gemisch, beispielsweise der Austrag aus einer homogen katalysierten Reaktion, eingefüllt wird und von dem es zu dem einen oder den mehreren Membranelementen geführt wird. Das zurückgeführte Permeat kann ebenfalls in den Feedbehälter geleitet werden. Zusätzlich oder alternativ ist es möglich, dass das zurückgeführte Permeat nicht in den Feedbehälter, sondern hinter den Feedbehälter aber vor die Fördereinrichtung, d. h. zu einem Punkt in der Leitung zwischen Feedbehälter und Fördereinrichtung geleitet wird.

Der zur Beschreibung der vorliegenden Erfindung benutzte Begriff Membranmodul bezieht sich auf eine anlagentechnische Untereinheit der Membranstufe. Ein Membranmodul ist demnach eine Zusammenschaltung von einem oder mehreren Membranelement(en). Membranmodule können entweder als Membranloop oder als Membranrack ausgestaltet sein. Unter Membranloop ist eine Untereinheit zu verstehen, in der mindestens ein Membranelement und mindestens eine Fördereinrichtung, durch die ein bewegter Überströmkreislauf erzeugt wird, vorhanden sind. Der Begriff Membranrack meint dagegen eine Untereinheit, die sich dadurch auszeichnet, dass mindestens ein Membranelement, jedoch keine Fördereinrichtung vorhanden ist und demnach auch kein bewegter Überströmkreislauf erzeugt wird.

Der Begriff Membranelement meint im Sinne der vorliegenden Erfindung die Membran bzw. den Aufbau oder die Vorrichtung, die die Membran enthält und wo die gewünschte Stofftrennung tatsächlich stattfindet, also die Komponente aus dem Gemisch bzw. der homogene Katalysator aus der Reaktionslösung abgetrennt wird. Dies können beispielsweise sogenannte Spiralwickelelemente sein, wie sie in vielen Anwendungen der industriellen Membrantrennung eingesetzt werden.

Die Erfindung beruht darauf, dass nur der Gesamtpermeatstrom aus der letzten Membranstufe in das zurückgeführte und das abgeführte Permeat aufgeteilt wird. Sollte nur eine Membranstufe vorliegen, so ist diese einzige Membranstufe auch die letzte Membranstufe. Sofern zwei oder mehr Membranstufen vorliegen, findet in der oder den ersten Membranstufe(n) keine Aufteilung statt, sondern der Gesamtpermeatstrom wird vollständig zur nächsten Membranstufe geführt. Die Aufteilung erfolgt dann wie vorgenannt beschrieben ausschließlich in der letzten Membranstufe. Das "Aufteilen" im Sinne der vorliegenden Erfindung bezieht sich ausschließlich auf die Menge bzw. den Massenstrom des Gesamtpermeats und meint explizit keinen zusätzlichen Trennschritt, bei dem die weitere Komponenten aus dem Gesamtpermeat entfernt werden, also beispielsweise keine Destillation, keine Extraktion, keine Kristallisation und keine weiteren Membrantrennschritte.

Ein Vorteil des erfindungsgemäßen Verfahrens ist, dass ein Teil des Gesamtpermeatstroms der letzten Membranstufe, also das zurückgeführte Permeat, nicht die Membranstufe und/oder nicht die Membraneinheit verlässt und dann erst beispielsweise über einen Permeatbehälter zurückgeführt wird, sondern innerhalb der mindestens einen Membranstufe und/oder der Membraneinheit verbleibt und von dort zum Feedbehälter und/oder hinter den Feedbehälter aber vor die Fördereinrichtung zurückgeführt wird. Dadurch wird es möglich auf eine nachgeschaltete Pumpe, die Permeat zurück in den Überströmkreislauf oder zurück in den Feedbehälter pumpt, zu verzichten, da sich die Permeatrückführung je nach Last selbst reguliert. Die Rückführung des zurückgeführten Permeats zum Feedbehälter und/oder hinter den Feedbehälter aber vor die Fördereinrichtung erfolgt also nicht mittels einer Fördereinrichtung, sondern hydraulisch, d.h. durch eine zwischen Permeatseite der Membraneinheit und Saugseite der Fördereinrichtung bzw. dem Feedbehälter bestehenden Druckdifferenz. Anders formuliert: Zwischen Permeatseite und Feedbehälter ist keine weitere Fördereinrichtung, insbesondere keine Pumpe.

Um die abfließenden Ströme des zurückgeführten und des abgeführten Permeats zu kontrollieren, kann auf der Permeatseite mindestens ein einstellbarer Fließwiderstand vorliegen, über den der Massenstrom des Permeats geregelt wird. Ein Fließwiderstand im Sinne der vorliegenden Erfindung ist ein Aktuator, mit dem der Massenstrom eines Stroms geregelt werden kann, beispielsweise ein Ventil. Weiterhin bevorzugt ist eine Ausführungsform, bei der auf Permeatseite mindestens zwei einstellbare Fließwiderstände, vorzugsweise genau zwei einstellbare Fließwiderstände, vorliegen, womit der Massenstrom des abgeführten Permeats, sowie der Permeatdruck insbesondere der Sammelschiene eingestellt werden können. Die Fließwiderstände sind insbesondere Ventile.

Der Teil des Gesamtpermeatstroms der letzten Membranstufe, der permeatseitig aus der Membranstufe und aus der Membraneinheit herausgeführt wird, also das abgeführte Permeat, kann zu einem nachfolgenden Prozessschritt geleitet werden. Unter dem Begriff Prozessschritt kann im Sinne der vorliegenden Erfindung jeder nachfolgende Prozess verstanden werden, beispielsweise Weiterverarbeitungs- oder Aufreinigungsprozessschritte oder Kombinationen daraus. Darunter fallen insbesondere eine (weitere) Umsetzung der abgetrennten Komponente, die Aufreinigung durch bekannte Verfahren wie Destillation, Verdampfung o. ä. Möglich sind auch nachfolgende Abfüll- oder Transportprozessschritte. Vor dem nachfolgenden Prozessschritt ist auch eine vorherige Lagerung in einem geeigneten Behälter, beispielsweise in einem Permeatbehälter, möglich. Sofern ein Permeatbehälter vorliegt, erfolgt die erfindungsgemäße Aufteilung des Gesamtpermeats vor dem Permeatbehälter, sodass nur das abgeführte Permeat zum Permeatbehälter gelangt. Es versteht sich, dass auch mehrere Prozessschritte, optional über eine vorherige Lagerung, hintereinander erfolgen können, beispielsweise eine Aufreinigung, gefolgt von einer Umsetzung der aufgereinigten Komponente und eine zusätzliche Aufreinigung des Umsetzungsprodukts.

Im Hinblick auf das erfindungsgemäße Membrantrennverfahren liegt eine ausgeglichene äußere Massenbilanz vor, das heißt der Massenstrom des der Membraneinheit zugeführten Feeds entspricht den Massenströmen der aus der Membraneinheit herausgeführten Permeat- und/oder Retentatströme. Dieser Umstand kann genutzt werden. In einer bevorzugten Ausführungsform der vorliegenden Erfindung wird der Massenstrom eines Stroms der drei Ströme, ausgewählt aus dem Feed zur Membraneinheit, dem abgeführten Permeat, und dem Retentat der Membraneinheit, von einem vorherigen oder nachgeschalteten Prozessschritt vorgegeben und ein weiterer der drei genannten Ströme auf einen Sollwert hin geregelt, beispielsweise einen konstanten Retentatstrom, ein konstantes Verhältnis Feed zu Retentat, etc. Dadurch ergibt sich aufgrund der äußeren Massenbilanz auch der dritte der drei genannten Ströme. Der Maßstab und damit die absoluten Massenströme sind anhand der Membranmodulgröße und -anzahl weitgehend beliebig einstellbar. In einer bevorzugten Ausführungsform beträgt das Verhältnis des Retentatmassenstroms zum Feedmassenstrom 1 bis 99%, vorzugsweise 10 bis 90% und besonders bevorzugt 15 bis 80%. In einer weiteren bevorzugten Ausführungsform beträgt das Verhältnis des Massenstroms des abgeführten Permeats zum Gesamtpermeatmassenstroms 1 bis 99%, vorzugsweise 30 bis 98%, besonders bevorzugt 60 bis 97%. Prozessschritt im Sinne der vorliegenden Erfindung ist eine Anlagen- oder Verfahrenseinheit, beispielsweise eine vor- oder nachgelagerte chemische Umsetzung, bei der das Permeat/Retentat eingesetzt wird, ein weiterer Trennschritt, beispielsweise eine thermische Trennung wie Dünnschichtverdampfung oder Destillation oder die Logistik, also insbesondere vor- oder nachgelagerte Tanklager oder eine Abfüllung. Vorgelagerte Prozessschritte sind insbesondere kontinuierlich durchgeführte Prozessschritte, über die kontinuierlich ein flüssiges Gemisch für das vorliegende Membrantrennverfahren bereitgestellt wird. Bevorzugt sind dies kontinuierliche durchgeführte chemische Umsetzungen, beispielsweise die im Folgenden noch genauer erläuterte Hydroformylierung oder Alkoxycarbonylierung.

Weiterhin liegt insbesondere auch eine ausgeglichene innere Massenbilanz (Massenstrom des Gesamtpermeats entspricht der Summe der Massenströme des zurückgeführten und des abgeführten Permeats) vor. Nach der vorliegenden Erfindung ist die innere Massenbilanz vorzugsweise weitgehend unabhängig von der äußeren Massenbilanz, d. h. die äußere Massenbilanz stellt grundsätzlich nur die Untergrenze für die innere Massenbilanz dar. Erfindungsgemäß bevorzugt ist deshalb, dass der Massenstrom des zurückgeführten Permeats schwanken kann und sich in Abhängigkeit, vorzugsweise in direkter Abhängigkeit, das heißt ohne einen zwischenliegenden Permeatbehälter, von dem Massenstrom des abgeführten Permeats einstellt. Das bedeutet auch, dass der Massenstrom des Gesamtpermeats abgesehen von technischen Limitierungen (durch Pumpen, Fließwiderstände, Membranfläche, etc.) unabhängig von der oben genannten äußeren Massenbilanz geregelt werden kann, solange der Massenstrom des Gesamtpermeats größer ist als der Massenstrom des abgeführten Permeats.

Der Massenstrom des Gesamtpermeats ist dabei von verschiedenen Parametern abhängig, zum Beispiel der Temperatur (des Membranmoduls) oder der Konzentration der Komponenten im Gemisch. In einer bevorzugten Ausführungsform der vorliegenden Erfindung werden deshalb der Druck auf der Retentatseite und/oder der Druck auf der Permeatseite bzw. der daraus resultierende Transmembrandruck (TMP = Druckdifferenz zwischen Permeat- und Retentatseite) und optional die Membranmodultemperatur geregelt, um die Menge des Gesamtpermeatstroms zu optimieren respektive eine gewünschte Menge des Gesamtpermeatstroms zu erhalten.

Das erfindungsgemäße Membrantrennverfahren kann auf verschiedene Arten regelungstechnisch eingestellt werden, in Abhängigkeit von der jeweiligen Regelgröße, einem zur Beeinflussung der Regelgröße vorhandenen Aktuator und der Regelungspriorität. Für das vorliegende Verfahren gibt es verschiedene Regelgrößen, wie den Füllstand des Feedbehälters, den Druck auf der Retentatseite und auf der Permeatseite, aus deren Differenz sich der Transmembrandruck (TMP) ergibt, sowie die Massenströme von Retentat und Permeat, die durch verschiedenen Aktuatoren, beispielsweise die Fördereinrichtung oder einen oder mehrere einstellbare Fließwiderstände, beeinflusst werden können.

Die nachfolgend beschriebenen regelungstechnischen Ausführungsformen beziehen sich - soweit sie eine aktive Förderung von Permeatströmen mittels Fördereinrichtungen betreffen - auf nicht erfindungsgemäße Vergleichs- oder Hintergrundausführungen.

Das erfindungsgemäße Membrantrennverfahren wird in einer bevorzugten Ausführungsform regelungstechnisch so eingestellt, dass der Massenstrom des Retentats und der TMP konstant gehalten werden. Diese beiden Parameter weisen folglich die höchsten Regelungsprioritäten auf, wobei die genaue Reihenfolge der Regelungsprioritäten beliebig festgelegt werden kann, d. h. der Massenstrom des Retentats kann die höchste Regelungspriorität und der TMP die zweithöchste Regelungspriorität aufweisen oder umgekehrt.

Der Massenstrom des Feeds zum (ersten) Membranmodul kann beim erfindungsgemäßen Verfahren in einer dem Fachmann bekannten Weise eingestellt werden, beispielsweise über die verwendete Fördereinrichtung der (ersten) Membranstufe. Die genaue Ausführungsform zur Einstellung des Massenstroms des Feeds zur (ersten) Membranstufe ist variabel und hängt zumeist von technischen Randbedingungen ab wie z. B. der gewählten Pumpenart, der Fördermenge und dem Förderdruck. Eine Regelung des Feedmassenstroms könnte beispielsweise umgesetzt werden mit einer mittels Drehzahl direkt geregelten Pumpe, z. B. einer Zahnradpumpe, einer Kolbenpumpe, einer Kolbenmembranpumpe oder ggf. einer mehrstufigen Kreiselpumpe. Eine andere Möglichkeit zur Regelung des Feedmassenstroms kann darin bestehen eine Kreiselpumpe und einen einstellbaren Fließwiderstand, wie ein (Regel-)Ventil, zu verwenden. Eine weitere Möglichkeit wäre die Verwendung einer Pumpe, z. B. einer Zahnradpumpe, einer Kolbenpumpe, einer Kolbenmembranpumpe oder einer Kreiselpumpe, in Kombination mit einer einstellbaren Rückströmleitung, beispielsweise von der Druckseite zur Saugseite der Pumpe.

Der retentatseitige Druck (Retentatdruck) kann durch die Fördereinrichtung und/oder optional einen weiteren Aktuator, beispielsweise einen Vordruckregler, geregelt werden. Der Retentatdruck kann beim erfindungsgemäße Verfahren 1 bis 100 bar, vorzugsweise 10 bis 80 bar und besonders bevorzugt 30 bis 60 bar betragen. Der Retentatdruck ist dabei größer als der permeatseitige Druck (Permeatdruck). Der Permeatdruck kann dabei 0 bis 50 bar, vorzugsweise 0 bis 10 bar und besonders bevorzugt 1 bis 5 bar betragen. Der Permeatdruck aller vorhandenen Membranmodule ist in einer bevorzugten Ausführungsform ähnlich (maximal 10% Abweichung voneinander) oder gleich.

Der aus der Differenz von Retentatdruck und Permeatdruck gebildete Transmembrandruck kann beim erfindungsgemäßen Verfahren 1 bis 90 bar, vorzugsweise 10 bis 80, besonders bevorzugt 30 bis 60 bar betragen. Die Membraneinheit bzw. die einzelnen Membranstufen umfassen vorzugsweise eine retentatseitige Druckregelung, die zumindest die Fördereinrichtung und einen Druckmesser umfasst, wobei der Retentatdruck in Abhängigkeit vom Druckmesser eingestellt werden kann. Dabei kann der Retentatdruck durch Einstellung beispielsweise des Fördervolumens der Fördereinrichtung und optional durch einen weiteren Aktuator, beispielsweise einem Vordruckregler, in Abhängigkeit des (durch den Druckmesser) gemessenen Rententatdrucks geregelt werden, wobei - bezogen auf einen vorher festgelegten Sollwert für den Retentatdruck - bei erhöhtem und/oder steigendem Retentatdruck das Fördervolumen der Fördereinrichtung verringert wird und bei verringertem und/oder sinkendem Retentatdruck das Fördervolumen der Fördereinrichtung erhöht wird.

Der Retentatdruck kann aber auch durch eine Kombination aus einem Druckmesser und einem einstellbaren Fließwiderstand, insbesondere einem Ventil auf der Retentatseite geregelt werden. Dabei kann der Retentatdruck beispielsweise durch die Ventilstellung in Abhängigkeit des gemessenen Rententatdrucks (durch den Druckmesser) geregelt werden, wobei - bezogen auf einen vorher festgelegten Sollwert für den Retentatdruck - bei erhöhtem und/oder steigendem Retentatdruck das Ventil weiter geöffnet und bei verringertem und/oder sinkendem Retentatdruck weiter geschlossen wird.

Der Massenstrom des Retentats (Retentatmassenstrom) wird beim erfindungsgemäßen Verfahren vorzugsweise über eine retentatseitige Massenstromregelung, die zumindest einen Massendurchflussmesser und einen einstellbaren Fließwiderstand, vorzugsweise ein Ventil, umfasst, geregelt. Der Retentatmassenstrom kann dabei durch Einstellung des Massendurchflussreglers in Abhängigkeit des gemessenen Retentatmassenstroms geregelt werden, wobei - bezogen auf einen vorher festgelegten Sollwert für den Retentatmassenstrom - bei erhöhtem und/oder steigendem Retentatmassenstrom das Ventil des Massendurchflussreglers weiter schließt und bei verringertem und/oder sinkendem Retentatmassenstrom das Ventil des Massendurchflussreglers weiter öffnet. Der Retentatdruck kann dann im Rahmen der minimal notwendigen und maximal möglichen Belastung der Membranstufe(n) frei gewählt werden.

Es ist gemäß einer anderen Ausführungsform aber auch möglich, dass der Retentatmassenstrom durch eine Kombination aus Massendurchflussmesser und der Fördereinrichtung geregelt wird. Der Retentatmassenstrom kann dabei beispielsweise durch Einstellung des Fördervolumens der Fördereinrichtung in Abhängigkeit des gemessenen Retentatmassenstroms geregelt werden, wobei - bezogen auf einen vorher festgelegten Sollwert für den Retentatmassenstrom - bei erhöhtem und/oder steigendem Retentatmassenstrom das Fördervolumen der Fördereinrichtung verringert wird und bei verringertem und/oder sinkendem Retentatmassenstrom das Fördervolumen der Fördereinrichtung erhöht wird.

Die Sensoren und Aktuatoren der retentatseitigen Massenstromregelung, die zumindest die Fördereinrichtung oder einen einstellbaren Fließwiderstand und einen Massendurchflussmesser umfasst, und der vorgenannten retentatseitigen Druckregelung, die zumindest die Fördereinrichtung oder einen einstellbaren Fließwiderstand und einen Druckmesser umfasst, können regelungstechnisch in beliebiger Weise miteinander verschaltet werden, um die beiden Regelgrößen Retentatmassenstrom und Retentatdruck zu regeln. Die Priorität der beiden Regelgrößen Retentatmassenstrom und Retentatdruck kann beim erfindungsgemäßen Verfahren untereinander beliebig gewählt werden. Vorzugsweise ist die Priorität der beiden Regelgrößen Retentatmassenstrom und Retentatdruck (bzw. dadurch der TMP) höher als die aller anderen Regelgrößen der Membrantrennstufe, weist also das schnellste Ansprechverhalten auf.

Der Massenstrom des abgeführten Permeats (der letzten Membranstufe) kann in direkter oder indirekter Abhängigkeit des Füllstands des Feedbehälters einer, vorzugsweise kontinuierlichen Regelung unterliegen, die sich dadurch auszeichnet, dass - bezogen auf einen vorher festgelegten Sollwert für den Füllstand des Feedbehälters, wobei der Sollwert vorzugsweise 20 bis 80%, besonders bevorzugt 30 bis 70 % des maximal möglichen Füllstands beträgt - bei steigendem Füllstand des Feedbehälters der Massenstrom des abgeführten Permeats erhöht und bei sinkendem Füllstand des Feedbehälters der Massenstrom des abgeführten Permeats verringert wird. Bei dieser Art der Regelung ist der Feedbehälter nicht vollständig gefüllt, da ansonsten der Füllstand an oder über dem oberen Rand seines Messbereichs liegt und somit unbekannt ist, wodurch keine Regelung auf einen Sollwert möglich ist. Die Einstellung des Massenstroms des abgeführten Permeats erfolgt insbesondere über mindestens einen einstellbaren Fließwiederstand. Im Falle einer kontinuierlichen Regelung wird der Füllstand des Feedbehälters dadurch vorzugsweise konstant gehalten. Das Regelungsprinzip nach dem Füllstand des Feedbehälters würde beispielsweise bewirken, dass bei Erreichen eines Tiefstands im Feedbehälter der Massenstrom des abgeführten Permeats immer weiter verringert wird und gegebenenfalls kein Permeat mehr abgeführt wird.

Die Temperaturen der drei Ströme Feed, Retentat und Permeat können in einem weiten Bereich variieren. Die Temperatur jedes der drei Ströme Feed, Retentat und Permeat beträgt unabhängig voneinander vorzugsweise -30 °C bis 150 °C, besonders bevorzugt 0 °C bis 100 °C und ganz besonders bevorzugt 20 °C bis 80 °C.

Zur Realisierung der vorgenannten regelungstechnischen Ausführungsarten des erfindungsgemäßen Verfahrens trägt auch der Aufbau der Membraneinheit bei, der im Folgenden genauer beschrieben werden soll.

Die Membraneinheit, die im erfindungsgemäßen Verfahren zur Abtrennung der Komponente aus dem Gemisch verwendet wird, umfasst mindestens eine Membranstufe. Die Membraneinheit kann aber auch mehrere Membranstufen umfassen, die seriell miteinander verbunden sind. In diesem Fall erfolgt die Aufteilung des Gesamtpermeatstroms nur in der letzten Membranstufe.

Eine Membranstufe der Membraneinheit des erfindungsgemäßen Verfahrens umfasst nach obiger Definition eine Fördereinrichtung. Die Fördereinrichtung, mit der das Gemisch als Feed zu dem einen oder den mehreren Membranmodulen geführt wird, ist vorzugsweise hinsichtlich ihres Fördervolumens einstellbar. Der Druck des Feeds zu dem einem oder den mehreren Membranmodulen kann dabei 1 bis 100 bar, vorzugsweise 10 bis 80 bar und besonders bevorzugt 30 bis 60 bar betragen. Als Fördereinrichtung eignen sich beispielsweise dem Fachmann bekannte Pumpen, wie Kreiselpumpen, Kolbenpumpen, Kolbenmembranpumpen, Kreiskolbenpumpen oder Zahnradpumpen.

Eine Membranstufe der erfindungsgemäßen Membraneinheit umfasst weiterhin mehrere Membranmodul(e). Die Anzahl der Membranmodule ist theoretisch nicht nach oben begrenzt, sondern hängt von den allgemeinen Prozessparametern und der gewünschten Membranfläche ab. Gemäß der Erfindung umfasst die Membranstufe mehrere Membranmodule, die weiterhin seriell miteinander verschaltet sind. Das zur Membraneinheit gelangte Gemisch wird zu (ersten) Membranstufe geführt, wo es mittels der Fördereinrichtung als Feed zu dem einen oder den mehreren Membranmodulen geführt wird. Innerhalb der Membranstufe erfolgt die Auftrennung in Permeat und Retentat, wobei aus jedem vorhandenen Membranmodul ein Permeatstrom entnommen wird.

Bei Vorliegen von mehreren Membranmodulen wird demnach eine der Anzahl der Membranmodule entsprechende Anzahl an Permeatströmen erzeugt. Die Membranmodule sind dabei vorzugsweise permeatseitig miteinander verbunden, beispielsweise über eine Sammelschiene. Im Gegensatz dazu wird insbesondere bei der seriellen Verschaltung jedoch nur ein Retentatstrom erhalten, da das Retentat des ersten Membranmoduls zum nächsten Membranmodul geleitet wird, von dem Retentat ein weiteres Permeat abgetrennt wird und das Rententat des zweiten Membranmoduls dann zum nächsten Membranmodul geführt wird oder, sofern nur zwei Membranmodule vorliegen, aus der Membranstufe und/oder der Membraneinheit herausgeführt wird.

Eine Membranstufe nach dem erfindungsgemäßen Verfahren umfasst einen der Fördereinrichtung vorgeschalteten Feedbehälter, aus dem der Feed durch die Fördereinrichtung als Feed zu den mindestens zwei Membranmodulen geführt wird. Sofern nur eine Membranstufe vorliegt, können in den Feedbehälter sowohl der Feed zur Membranstufe als auch das zurückgeführte Permeat der Membranstufe eingeleitet und dort gesammelt werden, bevor sie mittels der Fördereinrichtung als Feed zu den mindestens zwei Membranmodulen geführt werden. Liegt mehr als eine Membranstufe vor, können im Feedbehälter der ersten Stufe der Feed zur ersten Membranstufe und ein Retentat einer der nachfolgenden Stufe gesammelt werden, während in den Feedbehälter der nachfolgenden Stufe(n) jeweils das Permeat der vorherigen Membranstufe und entweder das Retentat der nachfolgenden Stufe oder in der letzten Membranstufe das zurückgeführte Permeat gesammelt werden können. Der Aufbau und die Spezifikationen eines solchen Feedbehälters sind dem Fachmann bekannt. Der Feedbehälter umfasst vorzugsweise eine Messeinheit für den Füllstand. Möglich ist bei beiden Varianten auch dass die jeweiligen zurückgeführten Ströme nicht in den Feedbehälter, sondern hinter den Feedbehälter aber vor die Fördereinrichtung geführt werden.

Die Membranstufe kann weiterhin Sensoren und/oder Aktuatoren umfassen, um die vorgenannten, bevorzugten regeltechnischen Vorgaben erfüllen zu können. Dazu zählen insbesondere Mess- und/oder Regeleinheiten zu den Parametern wie Temperatur, Druck, Massenstrom o.ä. Entsprechende Mess- und Regeleinheiten sind dem Fachmann bekannt.

Ein Membranmodul nach der vorliegenden Erfindung, wovon ein oder mehrere in der Membranstufe vorhanden sein können, umfasst ein oder mehrere Membranelement(e). Grundsätzlich können Membranmodule wie erwähnt entweder als Membranloop oder als Membranrack ausgestaltet sein. Vorzugsweise handelt es sich bei den erfindungsgemäß in der oder den Membranstufe(n) vorhandenen Membranmodulen um Membranloops.

Ein Membranloop umfasst ein oder mehrere Membranelement(e) und mindestens eine Fördereinrichtung. Bevorzugt umfasst ein Membranloop nur eine Fördereinrichtung. Diese Fördereinrichtung ist nicht identisch mit der Fördereinrichtung der entsprechenden Membranstufe, sondern das gesamte System weist dann mindestens zwei Fördereinrichtungen auf. Die Fördereinrichtung des Membranloops ist im Regelfall für die Umwälzung des Membranloops zuständig, während die Fördereinrichtung der Membranstufe im Regelfall für die Bedrückung der Membranmodule bzw. des Membranloops zuständig ist. Als Fördereinrichtung kann jede geeignete Pumpe verwendet werden. Solche Pumpen sind dem Fachmann bekannt. Die innerhalb eines Membranloops als Fördereinrichtung eingesetzte Pumpe ist vorzugsweise eine Kreiselpumpe. Durch die Fördereinrichtung wird ein bewegter Überströmkreislauf erzeugt. Durch den Überströmkreislauf kann idealerweise der Massentransport und somit die Trennleistung der Membran verbessert werden. Die Einstellung des Überströmkreislaufs kann dabei unabhängig vom übergreifendem Regelungskonzept und der äußeren sowie inneren Massenbilanz eingestellt werden.

Ein Membranloop kann weiterhin auch Mess- und/oder Regeleinheiten zu den Parametern wie Temperatur, Differenzdruck (axialer Druckverlust), Kreislaufmenge o.ä umfassen, beispielsweise eine Heizung oder Kühlung, um die Temperatur einzustellen. Weitere Mess- und Regeleinheiten sind dem Fachmann bekannt. In einer bevorzugten Ausführungsform ist der Druck aller vorhandenen Membranloops in einer Membranstufe ähnlich (Abweichung < 10%) oder identisch. Die Einstellung dieses zumindest ähnlichen Drucks kann sich ohne das Vorhandensein einer bestimmten Regeleinheit einstellen, kann aber auch mittels eines Druckreglers eingestellt werden. Der Druckregler für den Permeatdruck weist vorzugsweise das trägste Ansprechverhalten im Vergleich mit den anderen Aktuatoren, also der permeatseitigen Massenstromregelung, der retentatseitigen Massenstromregelung und der retentatseitigen Druckregelung auf.

Im Gegensatz zum vorherig beschriebenen Membranloop weist ein als Membranrack ausgestaltetes Membranmodul keine Fördereinrichtung auf, sondern ein oder mehrere Membranelemente und gegebenenfalls zusätzliche Mess- und Regeleinheiten auf.

Das oder die in dem Membranmodul, vorzugsweise im Membranloop, vorhandenen Membranelemente sind zur technischen Nutzung vorkonfektionierte Elemente, die die Membran enthalten und als die nicht weiter teilbare Grundeinheit des erfindungsgemäßen Membrantrennverfahren betrachtet werden können. Das oder die Membranelemente können als solche in dem Membranmodul eingesetzt werden oder in einem Druckgehäuse, beispielsweise einem Druckrohr angeordnet sein. Das einzeln betrachtete Druckrohr kann ein oder mehrere Membranelement(e) enthalten, vorzugsweise bis zu fünf Membranelemente. Sofern das oder die Membranelemente in einem Druckgehäuse, vorzugsweise einem Druckrohr angeordnet sind, kann ein Membranmodul mehrere Druckrohre umfassen. Die in einem Druckrohr angeordneten Membranelemente werden vorzugsweise feed- bzw. retentatseitig seriell durchströmt und sind permeatseitig verbunden. Als Membranelement einsetzbare Grundeinheiten können dem Fachmann bekannte Spiralwickelelemente eingesetzt werden. Ein oder mehrere Spiralwickelelemente können dann in einem Druckgehäuse, vorzugsweise einem Druckrohr vorhanden sein.

Als Membranen werden vorzugsweise solche eingesetzt, die eine trennaktive Schicht aus einem Material aufweisen, welches aus der Gruppe, bestehend aus Celluloseacetat, Cellulosetriacetat, Cellulosenitrat, regenerierter Cellulose, Polyimiden, Polyamiden, Polyetheretherketonen, sulfonierten Polyetheretherketonen, aromatischen Polyamiden, Polyamidimiden, Polybenzimidazolen, Polybenzimidazolone, Polyacrylnitril, Polyarylethersulfone, Polyester, Polycarbonaten, Polytetrafluorethylen, Polyvinylidenfluorid, Polypropylen, endständig oder seitenständig organomodifiziertem Siloxan, Polydimethylsiloxan, Silicone, Siliconacrylate, Polyphosphazene, Polyphenylsulfide, Polybenzimidazole, 6.6 Nylon^{®}, Polysulfone, Polyaniline, Polypropylene, Polyurethane, Acrylonitril/Glycidylmethacrylat (PANGMA), Polytrimethylsilylpropyne, Polymethylpentyne, Polyvinyltrimethylsilan, Polyphenylenoxid, alpha-Aluminiumoxide, gamma-Aluminiumoxide, Titanoxide, Siliciumoxide, Zirconiumoxide, mit Silanen hydrophobisierte keramische Membranen, wie sie in EP 1 603 663 B1 beschrieben sind, Polymere mit intrinsischer Mikroporosität (PIM) wie PIM-1 und anderen, wie sie z. B. in EP 0 781 166 B1 beschrieben werden, oder Mischungen daraus ausgewählt wird. Die oben genannten Stoffe können in der trennaktiven Schicht durch Zugabe von Hilfsstoffen vernetzt vorliegen oder als so genannte Mixed Matrix Membranen mit Füllstoffen wie z.B. Carbon Nano Tubes, Metal Organic Frameworks oder Hollow Spheres sowie Partikel von anorganischen Oxiden oder anorganische Fasern, wie z. B. Keramik- oder Glasfasern versehen sein.

Besonders bevorzugt werden Membranen eingesetzt, die als trennaktive Schicht eine Polymerschicht aus endständig oder seitenständig organomodifiziertem Siloxan, Polydimethylsiloxan, Siliconacrylaten oder Polyimid aufweisen, die aus Polymeren mit intrinsischer Mikroporosität (PIM) wie PIM-1 aufgebaut sind, oder wobei die trennaktive Schicht über eine hydrophobierte keramische Membran aufgebaut ist. Ganz besonders bevorzugt werden Membranen aus endständig oder seitenständig organomodifiziertem Siloxanen oder Polydimethylsiloxanen eingesetzt. Solche Membranen sind kommerziell erhältlich.

Neben den oben genannten Materialien können die Membranen weitere Materialien aufweisen. Insbesondere können die Membranen Stütz- oder Trägermaterialien aufweisen, auf die die trennaktive Schicht aufgebracht ist. Eine Auswahl von Stützmaterialien beschreibt EP 0 781 166, auf welches explizit verwiesen wird.

In einer besonders bevorzugten Ausführungsform wird das beschriebene Verfahren zur Membranabtrennung eines homogenen Katalysators genutzt. Die abzutrennende Komponente ist dann der homogene Katalysator und das flüssige Gemisch das aus einer Reaktionsstufe erhaltene Reaktionsgemisch.

Ein besonders bevorzugtes Verfahren gemäß der vorliegenden Erfindung ist deshalb ein Verfahren zur kontinuierlichen Abtrennung eines homogenen Katalysators aus einem flüssigen Reaktionsgemisch unter Verwendung einer Membraneinheit, die mindestens eine Membranstufe umfasst und mit dem aus einer Reaktionszone stammenden, den homogenen Katalysator enthaltenden Reaktionsgemisch als Feed gespeist wird,
wobei eine Membranstufe zumindest aus einer Fördereinrichtung, einem oder mehreren Membranmodul(en) und einem der Fördereinrichtung vorgeschalteten Feedbehälter besteht und wobei das Reaktionsgemisch aus dem Feedbehälter mittels der Fördereinrichtung als Feed zu dem einen oder den mehreren Membranmodulen geführt wird, wodurch der homogene Katalysator, jeweils bezogen auf das zum jeweiligen Membranmodul geführte Reaktionsgemisch, im resultierenden Permeatstrom abgereichert und im resultierenden Retentatstrom angereichert wird, dadurch gekennzeichnet, dass
der erhaltene Gesamtpermeatstrom aufgeteilt wird und ein Teil des Gesamtpermeatstroms, das zurückgeführte Permeat, zum Feedbehälter und/oder hinter den Feedbehälter aber vor die Fördereinrichtung rezykliert wird und der andere Teil des Gesamtpermeatstroms, das abgeführte Permeat, permeatseitig aus der mindestens einen Membranstufe und aus der Membraneinheit herausgeführt wird.

Das Reaktionsgemisch entstammt einem für das jeweilige Verfahren geeigneten Reaktionszone, vorzugsweise einem oder mehreren geeigneten Reaktoren. Der zumindest einen Großteil des homogenen Katalysators enthaltene Retentatstrom wird vorzugsweise zu der Reaktionszone, insbesondere dem oder den Reaktoren, zurückgeführt, ggf. nach vorheriger Aufreinigung und/oder Aufarbeitung des Katalysators. Da der Massenstrom aus der Reaktionszone produktionsbedingt schwanken kann, können die vorherig beschriebenen regelungs- und anlagentechnischen Vorgaben auch bei der Abtrennung des homogenen Katalysators angewendet werden.

In der Reaktionszone, vorzugsweise dem oder den Reaktoren, wird demnach eine homogen katalysierte Reaktion durchgeführt. Dabei kann es sich um folgende Reaktionen handeln: Oxidationen, Epoxidierungen, Hydroformylierungen, Hydroaminierungen, Hydroaminomethylierungen, Hydrocyanierungen, Hydrocarboxylierungen, Hydroxycarbonylierungen, Hydrocarboxyalkylierungen, Alkoxycarbonylierungen, Aminierungen, Ammonoxidation, Oximierungen, Hydrosilylierungen, Ethoxylierungen, Propoxylierungen, Carbonylierungen, Telomerisierungen, Methathesen, Suzuki-Kupplungen und Hydrierungen.

Vorzugsweise handelt es sich um eine Hydroformylierung. Die Hydroformylierung ist insbesondere eine Hydroformylierung von Olefinen mit 3 bis 15 Kohlenstoffatomen, vorzugsweise 8 bis 12 Kohlenstoffatomen. Die Hydroformylierung ist vorzugsweise eine homogen katalysierte Hydroformylierung, bei der das Katalysatorsystem (vollständig) gelöst in der flüssigen Phase des Reaktionsgemisches vorliegt. Das Katalysatorsystem der Hydroformylierung umfasst vorzugsweise ein Übergangsmetall aus der 8. oder 9. Gruppe des Periodensystems der Elemente (PSE) und mindestens einen organischen Phosphor-haltigen Liganden. Geeignete Phosphor-haltige Liganden sind dem Fachmann bekannt, vorzugsweise handelt es ich aber um monodentate Phosphor-haltige Liganden, beispielsweise Tris(2,4-di-tert-butylphenyl)phosphit.

Als Übergangsmetall können insbesondere Eisen, Ruthenium, Iridium, Cobalt oder Rhodium, vorzugsweise Cobalt oder Rhodium, besonders bevorzugt Rhodium eingesetzt werden. Als katalytische aktive Spezies werden üblicherweise (Liganden)-Carbonyl-Komplexe der Metallatome diskutiert, die sich unter erhöhtem Druck und erhöhter Temperatur im flüssigen Reaktionsgemisch bilden.

Die Hydroformylierung kann in Anwesenheit eines Lösemittels durchgeführt werden, wobei das Lösemittel mit dem Hydroformylierungsverfahren kompatibel sein sollte. Als Lösemittel können geeignete dem Fachmann bekannten Lösemittel für die Hydroformylierung verwendet werden, beispielsweise Alkane, aromatische Kohlenwasserstoffe, Wasser, Ether, Ester, Ketone, Alkohole und die Reaktions- oder Nebenprodukte der Hydroformylierung wie Aldehyde und Kondensationsprodukte der Aldehyde.

Weiterhin kann die Hydroformylierung bei einem Druck von 10 bis 400 bar, vorzugsweise 15 bis 270 bar durchgeführt werden. Die Temperatur bei der Hydroformylierung kann 70 bis 250 °C, vorzugsweise 100 bis 200 °C, besonders bevorzugt 120 bis 160 °C betragen.

Die vorliegende Erfindung wird anhand der nachfolgenden Abbildungen, in denen bestimmte Ausführungsformen gezeigt sind, beschrieben. Die Abbildungen stellen nur eine Veranschaulichung dar und sind nicht einschränkend zu verstehen.

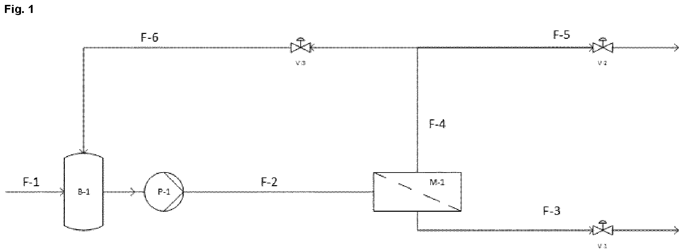

Fig. 1 zeigt einen exemplarischen Aufbau einer Membraneinheit, die eine Membranstufe umfasst. Die Membranstufe besteht dabei aus einem Feedbehälter (B-1), einer Pumpe (P-1) und einem Membranmodul (M-1). Der Feedbehälter (B-1) wird dabei mit dem flüssigen Gemisch als Feed zur Membranstufe (F-1) gespeist. Aus dem Feedbehälter (B-1) wird das flüssige Gemisch durch die Pumpe (P-1) als Feed (F-2) zum Membranmodul (M-1), beispielsweise einem Membranloop, geführt, wo die eigentliche Membrantrennung stattfindet. Aus dem Membranmodul (M-1) werden dann das Retentat (F-3) über das Ausgangsventil (V-1) und das Gesamtpermeat (F-4) entnommen. Das Gesamtpermeat (F-4) wird nachfolgend aufgeteilt, wodurch ein Teil des Gesamtpermeats über das Ausgangsventil (V-2) aus der Membranstufe und der Membraneinheit abgeführt (F-5) und der andere Teil des Permeats (F-6) über das Rückführungsventil (V-3) zum Feedbehälter (B-1) zurückgeführt werden kann.

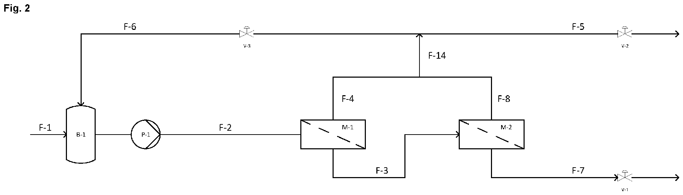

Fig. 2 zeigt einen exemplarischen Aufbau einer Membraneinheit, die eine Membranstufe aber mehrere Membranmodule umfasst. Die Membranstufe besteht aus einem Feedbehälter (B-1), einer Pumpe (P-1) und zwei Membranmodulen (M-1 / M-2). Der Feedbehälter (B-1) wird dabei mit dem flüssigen Gemisch als Feed zur Membranstufe (F-1) gespeist. Aus dem Feedbehälter (B-1) wird das flüssige Gemisch durch die Pumpe (P-1) als Feed (F-2) zum ersten Membranmodul (M-1), beispielsweise einem Membranloop, geführt, wo die in diesem Fall erste Membrantrennung stattfindet. Aus dem Membranmodul (M-1) werden dann das Retentat des ersten Membranmoduls (F-3) und das Permeat des ersten Membranmoduls (F-4) entnommen. Das Retentat (F-3) wird zum zweiten Membranmodul (M-2) geleitet, wo eine weitere Membrantrennung stattfindet, wodurch das Permeat (F-8) und das Retentat (F-7) des zweiten Membranmoduls (M-2) entstehen. Das Retentat (F-7) wird über das Ausgangsventil (V-1) entnommen. Die beiden Permeate (F-4 / F-8) der beiden Membranmodule (M-1 / M-2) wird zu einem Gesamtpermeat (F-14) vereint und anschließend aufgeteilt, wodurch ein Teil des Gesamtpermeats (F-5) über das Ausgangsventil (V-2) abgeführt und der andere Teil des Permeats (F-6) über das Rückführungsventil (V-3) zum Feedbehälter (B-1) zurückgeführt werden kann.

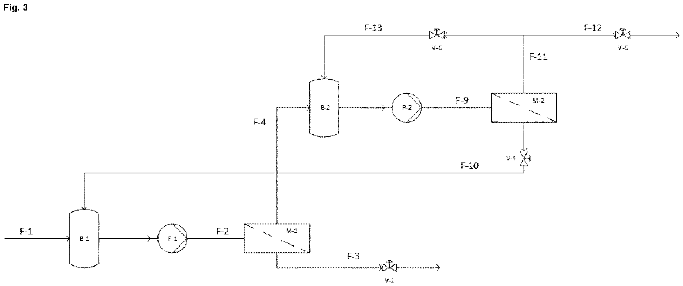

Fig. 3 zeigt einen exemplarischen Aufbau einer Membraneinheit, welche zwei Membranstufen umfasst. Die Membranstufen bestehen dabei jeweils aus einem Feedbehälter (B-1 / B-2), jeweils einer Pumpe (P-1 / P-2) und einem Membranmodul (M-1 / M-2). Der Feedbehälter (B-1) wird dabei mit dem flüssigen Gemisch als Feed zur Membranstufe (F-1) gespeist. Aus dem Feedbehälter (B-1) wird das flüssige Gemisch durch die Pumpe (P-1) als Feed (F-2) zum Membranmodul (M-1), beispielsweise einem Membranloop, geführt, wo die Membrantrennung stattfindet. Aus dem Membranmodul (M-1) werden dann das Gesamtpermeat (F-4) der ersten Membranstufe und das Retentat (F-3) über das Ausgangsventil (V-1) entnommen. Das Permeat (F-4) des ersten Membranmoduls (M-1) wird zum Feedbehälter (B-2) der zweiten Membranstufe geleitet und von dort mittels einer Pumpe (P-2) als Feed (F-9) zum Membranmodul (M-2) der zweiten Membranstufe (M-2) geführt, wo eine weitere Membrantrennung stattfindet. Aus dem Membranmodul (M-2) der zweiten Membranstufe werden dabei das Gesamtpermeat (F-11) der zweiten Membranstufe (M-2) und das Retentat (F-10) abgenommen. Das Retentat (F-10) wird nachfolgend über das Ausgangsventil (V-4) zum Feedbehälter (B-1) der ersten Membranstufe geführt. Das Gesamtpermeat (F-11) wird nach dem Austritt aus dem Membranmodul (M-2) aufgeteilt, wodurch ein Teil des Permeats (F-12) über das Ausgangsventil (V-5) abgeführt und der andere Teil des Permeats (F-13) über das Rückführungsventil (V-6) zum Feedbehälter (B-2) der zweiten Membranstufe (M-2) zurückgeführt werden kann.

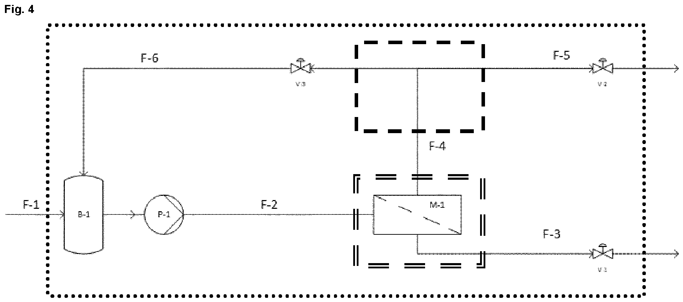

Fig. 4 entspricht grundsätzlich der Fig. 1, enthält also nur eine Membranstufe, enthält aber zur Verdeutlichung der angesprochenen Massenbilanzen zusätzliche Markierungen. Der Begriff Massenbilanz wird in der vorliegenden Anmeldung auf Basis von zwei grundlegenden Annahmen verwendet. Die erste relevante Annahme ist, dass ein stationäres System (im Englischen "steady state") vorliegt, was im vorliegenden Fall bedeutet, dass über die Zeit keine Akkumulation der Stoffgemische innerhalb der Membraneinheit stattfindet, sondern höchstens temporäre Schwankungen vorliegen können. Die Gesamtmasse im System bleibt also unabhängig von der Zeit gleich. Gleichzeitig und das ist die zweite Annahme findet in unserem Massenbilanzkreis keine Reaktion statt. Dies bedeutet, dass nicht nur die Gesamtmasse, sondern auch die Massen der Einzelkomponenten gleichbleiben.

Die äußere Gesamtmassenbilanz bezieht sich auf die gepunktete Markierung in Fig. 4. Der Massenfluss des Feeds F-1 ist dabei gleich der Summe vom Massenfluss des Retentats F-3 und vom Massenfluss des Permeats F-5, also F-1 = F-3 + F-5.

Die innere Gesamtmassenbilanz, die sich auf das doppelt gestrichelte Kästchen um die Membranstufe M-1 in Fig. 4 bezieht, ist entsprechend definiert: Der Massenfluss des Feeds F-2 ist dabei gleich der Summe vom Massenfluss des Retentats F-3 und vom Massenfluss des Gesamtpermeats F-4, also F-2 = F-3 + F-4.

Daraus folgt, dass sich bei Vorgabe von zwei Strömen der äußeren Massenbilanz der dritte Strom der äußeren Massenbilanz ergibt. Es lassen sich also nur zwei der drei Ströme unabhängig bzw. von außen gesteuert bestimmen. Genauso verhält es sich bei der inneren Massenbilanz, wobei hier zu beachten ist, dass durch die äußere Massenbilanz immer mindestens ein Strom der inneren Massenbilanz vorgegeben ist. Demnach kann man insgesamt nur zwei Ströme der äußeren Massenbilanz und noch einen zusätzlichen Strom der inneren Massenbilanz festlegen. Alle anderen Ströme ergeben sich daraus.

## Patentansprüche

1. Verfahren zur kontinuierlichen Abtrennung einer Komponente aus einem flüssigen Gemisch unter Verwendung einer Membraneinheit, die mindestens eine Membranstufe umfasst und mit dem Gemisch als Feed (F-1) gespeist wird,
wobei eine Membranstufe zumindest aus einer Fördereinrichtung (P-1), mehreren Membranmodulen (M-1, M-2), die seriell miteinander verschaltet sind, und einem der Fördereinrichtung vorgeschalteten Feedbehälter (B-1) besteht und wobei das Gemisch aus dem Feedbehälter (B-1) mittels der Fördereinrichtung (P-1) als Feed (F-2) zu den mehreren Membranmodulen (M-1, M-2) geführt wird, wodurch die abzutrennende Komponente, jeweils bezogen auf das zum jeweiligen Membranmodul (M-1, M-2) geführte Gemisch, im resultierenden Permeatstrom dieses jeweiligen Membranmoduls (M-1, M-2) abgereichert und im resultierenden Retentatstrom dieses jeweiligen Membranmoduls (M-1, M-2) angereichert wird oder umgekehrt, **dadurch gekennzeichnet, dass**
der erhaltene Gesamtpermeatstrom (F-14) der letzten Membranstufe aufgeteilt wird und ein Teil des Gesamtpermeatstroms (F-6), das zurückgeführte Permeat, zum Feedbehälter (B-1) und/oder hinter den Feedbehälter (B-1) aber vor die Fördereinrichtung (P-1) rezykliert wird und der andere Teil des Gesamtpermeatstroms (F-5), das abgeführte Permeat, permeatseitig aus der letzten Membranstufe und aus der Membraneinheit herausgeführt wird, wobei das Rezyklieren des zurückgeführten Permeats (F-6) zum Feedbehälter (B-1) und/oder hinter den Feedbehälter (B-1) aber vor die Fördereinrichtung (P-1) nicht mittels einer Fördereinrichtung (P-1), sondern hydraulisch, d. h. durch eine zwischen Permeatseite der Membraneinheit und Saugseite der Fördereinrichtung (P-1) bzw. dem Feedbehälter (B-1) bestehenden Druckdifferenz, erfolgt.

2. Verfahren nach Anspruch 1, wobei der Massenstrom des zurückgeführten Permeats (F-6) schwanken kann und sich in Abhängigkeit von dem Massenstrom des abgeführten Permeats (F-5) einstellt.

3. Verfahren Anspruch 1 oder 2, wobei der Druck auf Retentatseite und/oder der Druck auf Permeatseite bzw. der daraus resultierende Transmembrandruck (TMP) und optional die Membranmodultemperatur geregelt werden, um eine gewünschte Menge des Gesamtpermeatstroms (F-14) zu erhalten.

4. Verfahren nach einem der vorhergehenden Ansprüche, wobei sowohl der Massenstrom des abgeführten Permeats (F-5) als auch der Permeatdruck jeweils mittels eines einstellbaren Fließwiderstandes geregelt werden.

5. Verfahren nach einem der vorhergehenden Ansprüche, wobei der Massenstrom des abgeführten Permeats (F-5) in direkter oder indirekter Abhängigkeit des Füllstands des Feedbehälters (B-1) einer, vorzugsweise kontinuierlichen, Regelung unterliegt, die sich dadurch auszeichnet, dass - bezogen auf einen vorher festgelegten Sollwert für den Füllstand des Feedbehälters (B-1) - bei steigendem Füllstand des Feedbehälters (B-1) der Massenstrom des abgeführten Permeats (F-5) erhöht und bei sinkendem Füllstand des Feedbehälters (B-1) der Massenstrom des abgeführten Permeats (F-5) verringert wird.

6. Verfahren nach einem der vorhergehenden Ansprüche, wobei der retentatseitige Druck (Retentatdruck) durch die Fördereinrichtung (P-1), mit der der Feed (F-2) zu den mehreren Membranmodulen (M-1, M-2) geführt wird, und optional einen weiteren Aktuator, beispielsweise einen Vordruckregler, oder durch eine Kombination aus einem Druckmesser und einem einstellbaren Fließwiderstand, insbesondere einem Ventil (V-1) auf der Retentatseite, geregelt wird.

7. Verfahren nach einem der vorhergehenden Ansprüche, wobei der retentatseitige Massenstrom (Retentatmassenstrom) über eine retentatseitige Massenstromregelung, die zumindest einen Massendurchflussmesser und einen einstellbaren Fließwiderstand, vorzugsweise ein Ventil (V-1), umfasst, oder durch eine Kombination aus Massendurchflussmesser und Fördereinrichtung geregelt wird.

8. Verfahren nach einem der vorhergehenden Ansprüche, wobei die Komponente ein homogener Katalysator ist, der aus einem Reaktionsgemisch abgetrennt wird.

9. Verfahren nach einem der vorhergehenden Ansprüche, wobei die Fördereinrichtung (P-1) eine Pumpe ist.

## Claims

1. Method of continuously separating a component from a liquid mixture using a membrane unit which comprises at least one membrane stage and is fed with the mixture as feed (F-1),
wherein a membrane stage consists at least of a conveying device(P-1), a plurality of mutually series-connected membrane modules (M-1, M-2), and a feed vessel (B-1) upstream of the conveying device, and wherein the mixture is guided from the feed vessel (B-1) by means of the conveying device (P-1) as feed (F-2) to the plurality of membrane modules (M-1, M-2), which results in reduction of the component to be separated off, based in each case on the mixture guided to the respective membrane module (M-1, M-2), in the resulting permeate stream from this respective membrane module (M-1, M-2) and enrichment in the resulting retentate stream from this respective membrane module (M-1, M-2) or vice versa, **characterized in that**
the overall permeate stream (F-14) obtained from the last membrane stage is divided and a portion of the overall permeate stream (F-6), the recycled permeate, is recycled to the feed vessel (B-1) and/or beyond the feed vessel (B-1) but upstream of the conveying device (P-1) and the other portion of the overall permeate stream (F-5), the removed permeate, is conducted out of the last membrane stage and out of the membrane unit on the permeate side, wherein the recycling of the recycled permeate (F-6) to the feed vessel (B-1) and/or beyond the feed vessel (B-1) but upstream of the conveying device (P-1) is not by means of a conveying device (P-1) but by hydraulic means, i.e. by means of a pressure differential existing between the permeate side of the membrane unit and the suction side of the conveying device (P-1) or the feed vessel (B-1).

2. Method according to Claim 1, wherein the mass flow rate of the recycled permeate (F-6) can fluctuate and is established depending on the mass flow rate of the removed permeate (F-5).

3. Method according to Claim 1 or 2, wherein the pressure on the retentate side and/or the pressure on the permeate side or the resulting transmembrane pressure (TMP) and optionally the membrane module temperature are controlled in order to obtain a desired amount of the overall permeate stream (F-14).

4. Method according to any of the preceding claims, wherein both the mass flow rate of the removed permeate (F-5) and the permeate pressure are controlled by means of an adjustable flow resistor.

5. Method according to any of the preceding claims, wherein the mass flow rate of the removed permeate (F-5), depending directly or indirectly on the fill level of the feed vessel (B-1), is subject to preferably continuous closed-loop control, a feature of which is that - based on a target value fixed beforehand for the fill level of the feed vessel (B-1) - the mass flow rate of the removed permeate (F-5) increases with rising fill level of the feed vessel (B-1) and the mass flow rate of the removed permeate (F-5) decreases with falling fill level of the feed vessel (B-1).

6. Method according to any of the preceding claims, wherein the pressure on the retentate side (retentate pressure) is controlled by means of the conveying device (P-1) with which the feed (F-2) is fed to the plurality of membrane modules (M-1, M-2), and optionally a further actuator, for example a supply pressure regulator, or by means of a combination of a manometer and an adjustable flow resistor, especially a valve (V-1) on the retentate side.

7. Method according to any of the preceding claims, wherein the mass flow rate on the retentate side (retentate mass flow rate) is controlled by means of a closed-loop mass flow controller on the retentate side comprising at least a mass flow meter and an adjustable flow resistor, preferably a valve (V-1), or by means of a combination of mass flow meter and conveying device.

8. Method according to any of the preceding claims, wherein the component is a homogeneous catalyst which is separated from a reaction mixture.

9. Method according to any of the preceding claims, wherein the conveying device (P-1) is a pump.

## Revendications

1. Procédé de séparation continue d'un composant à partir d'un mélange liquide à l'aide d'une unité membranaire comprenant au moins un étage membranaire et alimentée avec le mélange en tant qu'alimentation (F-1), dans lequel un étage membranaire est constitué au moins d'un dispositif de transport (P-1), de plusieurs modules membranaires (M-1, M-2) raccordés en série les uns aux autres, et d'un réservoir d'alimentation (B-1) disposé en amont du dispositif de transport, et dans lequel le mélange est acheminé depuis le réservoir d'alimentation (B-1) au moyen du dispositif de transport (P-1) sous forme d'alimentation (F-2) vers les plusieurs modules membranaires (M-1, M-2), de sorte que le composant à séparer, par rapport au mélange acheminé vers le module membranaire (M-1, M-2) respectif, est appauvri dans le flux de perméat résultant de ce module membranaire (M-1, M-2) respectif et enrichi dans le flux de rétentat résultant de ce module membranaire (M-1, M-2) respectif, ou inversement, **caractérisé en ce que**
le flux total de perméat obtenu (F-14) du dernier étage membranaire est divisé, une partie du flux total de perméat (F-6), constituant le perméat recyclé, étant recyclée vers le réservoir d'alimentation (B-1) et/ou derrière le réservoir d'alimentation (B-1), mais avant le dispositif de transport (P-1), et l'autre partie du flux total de perméat (F-5), constituant le perméat évacué, étant évacuée côté perméat depuis le dernier étage membranaire et hors de l'unité membranaire, le recyclage du perméat recyclé (F-6) vers le réservoir d'alimentation (B-1) et/ou derrière le réservoir d'alimentation (B-1), mais avant le dispositif de transport (P-1), n'étant pas réalisé au moyen d'un dispositif de transport (P-1), mais hydrauliquement, c'est-à-dire par une différence de pression existant entre le côté perméat de l'unité membranaire et le côté aspiration du dispositif de transport (P-1) ou du réservoir d'alimentation (B-1).

2. Procédé selon la revendication 1, dans lequel le débit massique du perméat recyclé (F-6) peut fluctuer et s'établit en fonction du débit massique du perméat évacué (F-5).

3. Procédé selon la revendication 1 ou 2, dans lequel la pression du côté rétentat et/ou la pression du côté perméat, ou la pression transmembranaire (TMP) en résultant, et optionnellement la température du module membranaire sont régulées afin d'obtenir une quantité souhaitée du flux total de perméat (F-14).

4. Procédé selon l'une quelconque des revendications précédentes, dans lequel à la fois le débit massique du perméat évacué (F-5) et la pression du perméat sont régulés respectivement au moyen d'une résistance à l'écoulement réglable.

5. Procédé selon l'une quelconque des revendications précédentes, dans lequel le débit massique du perméat évacué (F-5) est soumis à une régulation, de préférence continue, en dépendance directe ou indirecte du niveau de remplissage du réservoir d'alimentation (B-1), laquelle est **caractérisée en ce que** - par rapport à une valeur de consigne préalablement définie pour le niveau de remplissage du réservoir d'alimentation (B-1) - lorsque le niveau de remplissage du réservoir d'alimentation (B-1) augmente, le débit massique du perméat évacué (F-5) est augmenté et, lorsque le niveau de remplissage du réservoir d'alimentation (B-1) diminue, le débit massique du perméat évacué (F-5) est diminué.

6. Procédé selon l'une quelconque des revendications précédentes, dans lequel la pression côté rétentat (pression du rétentat) est régulée par le dispositif de transport (P-1) au moyen duquel l'alimentation (F-2) est acheminée vers les plusieurs modules membranaires (M-1, M-2), et optionnellement par un autre actionneur, par exemple un régulateur de pression amont, ou par une combinaison d'un capteur de pression et d'une résistance à l'écoulement réglable, notamment une vanne (V-1) située du côté rétentat.

7. Procédé selon l'une quelconque des revendications précédentes, dans lequel le débit massique côté rétentat (débit massique du rétentat) est régulé au moyen d'une régulation du débit massique côté rétentat comprenant au moins un débitmètre massique et une résistance à l'écoulement réglable, de préférence une vanne (V-1), ou par une combinaison d'un débitmètre massique et d'un dispositif de transport.

8. Procédé selon l'une quelconque des revendications précédentes, dans lequel le composant est un catalyseur homogène séparé à partir d'un mélange réactionnel.

9. Procédé selon l'une quelconque des revendications précédentes, dans lequel le dispositif de transport (P-1) est une pompe.
